# EUROPÄISCHE PATENTSCHRIFT

(11) **EP 0 535 620 B1**
(45) Veröffentlichungstag und Bekanntmachung des Hinweises auf die Patenterteilung: **23.08.1995**
(21) Anmeldenummer: 92116697.1
(22) Anmeldetag: 30.09.1992
(51) Int. Cl.: B23K 26/00

(54) **Verfahren zum Strukturieren oder Polieren von Werkstücken aus Glas, insbesondere Bleikristall**
Method for patterning and polishing glass workpieces, in particular made of lead crystal
Méthode pour structurer et polir des pièces de verre, en particulier de cristal de plomb

(30) Priorität: 02.10.1991 DE 4132817
(43) Veröffentlichungstag der Anmeldung: 07.04.1993
(73) Patentinhaber: ANNA HÜTTE GmbH, D-92670 Windischeschenbach (DE); ATZ-EVUS APPLIKATIONS- UND TECHNIK-ZENTRUM FÜR ENERGIEVERFAHREN-,UMWELT- UND STRÖMUNGSTECHNIK, D-92237 Sulzbach-Rosenberg (DE)
(72) Erfinder: Jaschek, Rainer, Dipl.-Ing., W-8500 Nürnberg 30 (DE); Geith, Andreas, Dipl.-Ing., W-8520 Erlangen (DE)
(74) Vertreter: Graf, Helmut, Dipl.-Ing.

(56) Entgegenhaltungen:
- DE-A- 3 922 478
- FR-A- 2 332 839
- TECHNISCHE RUNDSCHAU Bd. 80, Nr. 37, 9. September 1988, BERN, SCHWEIZ Seiten 21 - 34 , XP000051301 J]RG STEFFEN 'Der Laser in der Fertigungstecknik'
- BLESSINGER, JR. 'Pierce control for laser beam drilling through glass' 2. September 1976 , RCA , PRINCETON, NJ, USA
- PATENT ABSTRACTS OF JAPAN vol. 10, no. 33 (M-452)(2090) 8. Februar 1986 & JP-A-60187 489(MITSUBISHI DENKI K.K.) 24 September 1985

## Beschreibung

Die Erfindung bezieht sich auf ein Verfahren gemäß Oberbegriff Patentanspruch 1.

Eine Wärmebehandlung von aus Glas hergestellten Werkstücken, die (Wärmebehandlung) vielfach auch als Feuerpolitur bezeichnet wird, ist in den unterschiedlichsten Ausführungen bekannt.

Bekannt sind weiterhin auch Verfahren und Vorrichtungen zum Polieren von vorgeschliffenen Oberflächen aus Werkstücken aus Glas (FR-A-2 332 839), bei denen die zu behandelnde Oberfläche punktuell und sukzessive mit einem Laserstrahl und dabei speziell mit dem Strahl eines CO₂-Lasers beaufschlagt wird, um so durch punktuelles Schmelzen des Glases des Werkstückes auch an rauhen Flächen, d.h. insbesondere an vorgeschliffenen Flächen eine glatte Oberflächenstruktur zu erhalten. In einer praktischen Produktion brauchbare Ergebnisse konnten mit diesem Laserverfahren aber nicht erzielt werden.

Neben dem Laserverfahren und der Feuerpolitur werden auch heute noch in erheblichem Umfange sog. Säure-Polierverfahren verwendet, bei denen der jeweilige Rohling bzw. das jeweilige Werkstück in einem Säurebad bestehend aus einer Mischung von Fluor- und Schwefelsäure behandelt wird. Dabei fallen aber erhebliche Mengen von blei-und arsenhaltigen Rückständen (Neutralisationsgipse) an, die auf Sonderdeponien entsorgt werden müssen.

Aufgabe der Erfindung ist es, ein Verfahren aufzuzeigen, das als praktikable Alternative eine Strukturierung bzw. Polierung von Werkstücken aus Glas und insbesondere aus Bleikristall ermöglichen und u.a. auch eine unerwünschte Verfärbung des Glases bewirkende Oxidationsprozesse wirksam vermeidet.

Zur Lösung dieser Aufgabe ist ein Verfahren entsprechend dem Patentanspruch 1 ausgeführt.

Bei dem erfindungsgemäßen Verfahren erfolgt die Behandlung des jeweiligen Werkstückes bevorzugt mit einer von einem Laser und dabei vorzugsweise von einem cw-CO₂-Laser gebildeten punktuellen bzw. punktuell wirkenden Energiequelle, wobei das jeweilige Werkstück in geeigneter Weise, beispielsweise in einem Durchlaufofen, vor der Behandlung auf eine Temperatur vorgewärmt wird, die etwas unterhalb der Transformationstemperatur des Glases des zu behandelnden Werkstückes liegt. Grundsätzlich ist es aber auch möglich, bei der Behandlung eine niedrigere Vorwärmtemperatur zu verwenden.

Mit einem entsprechenden Handhabungssystem und Werkstückträger mit Einspannhalterung (z.B. Roboter und/oder x-y-Tisch mit CNC-Steuerung) wird das jeweilige Werkstück aufgenommen und in den Bereich des Laserstrahles positioniert. Hierbei ist es wesentlich, daß während des gesamten Bearbeitungsprozesses keine Wärmeverluste auftreten. Dies wird beispielsweise dadurch erreicht, daß die Behandlung innerhalb eines Behandlungsraumes oder eines Ofens erfolgt, der eine der Vorwärmtemperatur entsprechende Temperatur besitzt. Die Aufnahme mit dem Handhabungssystem erfolgt dabei bevorzugt so, daß an den Berührungspunkten zwischen einem Aufnehmer des Handhabungssystemes und dem Werkstück keine Wärme verlorengeht. Dies kann durch Verwendung entsprechender wärmeisolierender Materialien für das Handhabungssystem und/oder die Werkstückhalterung bzw. Aufspannhalterung des Werkstückträgers erzielt werden. Selbstverständlich ist dafür gesorgt, daß der Strahl des Lasers für die Behandlung ungehindert auf das Werkstück auftreffen kann.

Bei der Behandlung erfolgt eine Relativbewegung zwischen dem Laserstrahl und dem Werkstück in der Form, daß auf jeden Bereich der zu behandelnden Oberfläche des Werkstückes der Laserstrahl mindestens einmal auftrifft. Die Relativbewegung kann dabei spiralförmig rotierend entlang des gesamten Werkstückes erfolgen, d.h. dieses ist dann in einer rotierend angetriebenen Aufspanneinrichtung derart eingespannt, daß der Laserstrahl senkrecht auf das rotierende Werkstück auftrifft. Die Aufspannhalterung wird dann zusätzlich noch in einer der Drehachse entsprechenden Achsrichtung bewegt.

Grundsätzlich besteht auch die Möglichkeit, den Vorschub dadurch zu realisieren, daß das Werkstück axial relativ zum Laserstrahl mit Hilfe eines x-y-Tisches verfahren wird und nach jeder geradlinigen Bahn oder Zeile in einer Achsrichtung das Werkstück in der anderen Achsrichtung weiterbewegt wird, so daß sich mehrere dicht aneinander anschließende oder einander überlappende Bahnen ergeben, auf denen sich der auf das Werkstück auftreffende Laserstrahl bzw. der Behandlungsbereich bewegt.

Grundsätzlich ist auch eine mehrfache Behandlung jedes oder einzelner Bereiche des Werkstückes möglich. Weiterhin ist es möglich, den Vorschub und dadurch die Behandlungsdauer und/oder die Energie des Laserstrahles zu steuern, und zwar in Abhängigkeit von der Form bzw. Strukturierung, die das Werkstück an der jeweils behandelten Stelle aufweist.

Insbesondere durch eine Mehrfachbehandlung wird es möglich, eine Vorwärmung der jeweils anschließend zu behandelnden Bereiche zu erreichen und damit eine spannungsarme Behandlung sicherzustellen. Da von den glatten Flächen des Werkstückes der auftreffende Laserstrahl stärker reflektiert wird als an aufgerauhten Oberflächenbereichen, können die für die Behandlung maßgeblichen Parameter und dabei insbesondere die Leistungsflußdichte und/oder Behandlungsdauer bzw. Vorschubgeschwindigkeit so eingestellt werden, daß ein partielles Aufschmelzen des Glases des behandelten Werkstückes im wesentlichen nur an rauhen bzw. geschliffenen Oberflächenbereichen erfolgt, d.h. nur hier eine Behandlung durch den Laserstrahl durchgeführt wird. Hierbei ist dann auch sichergestellt, daß nur eine sehr dünne Oberflächenschicht erhitzt wird, die aufgrund der daraus resultierenden niedrigeren Viskosität zerfließt und eine geglättete Oberfläche ergibt. Bestehende Schliffmuster und Strukturen bleiben bei dem erfindungsgemäßen Verfahren in ihrer Form und insbesondere auch in ihren Winkeln voll erhalten, während scharfe Schliffkanten leicht abgerundet werden. Ist das Werkstück aus Bleikristall hergestellt, so besitzt dieses nach der Behandlung den für Bleikristallprodukte charakteristischen Glanz.

Durch den Einsatz verschiedener Optiken zur Strahlformung, wie z.B. einer Spiegeloptik, einer Strichoptik, einer Facettenoptik oder eines Härteadapters besteht die Möglichkeit, den Laserstrahl optimal so zu formen, daß über die Fläche des Strahles verteilt einige Energiespitzen auftreten.

Durch eine Einstellung der Rauhigkeit der Schleifwerkzeuge läßt sich eine Glasoberfläche derart erreichen, daß nach der Laserbearbeitung der Eindruck geglätteter Schleifspuren auf der Oberfläche entsteht, die dem Werkstück dann überraschender Weise den charakteristischen Anschein einer handwerklichen Bearbeitung verleihen.

Die verwendeten Leistungsflußdichten hängen von der Rauhigkeit der verwendeten Schleifwerkzeuge ab, d.h. bei feineren Schleifwerkzeugen bei entsprechend niedriger Rauhigkeit ist eine etwas größere Leistungsflußdichte erforderlich. Wenn die Rauhigkeit dagegen höher ist, kann mit niedrigeren Leistungsflußdichten, allerdings mit höheren Wechselwirkungszeiten gearbeitet werden, um ein vollständiges Ausfließen der aufgeschmolzenen Schicht zu gewährleisten.

Es besteht weiterhin die Möglichkeit, mit Hilfe eines Laserstrahls, der eine homogene Energieverteilung aufweist, die Oberfläche eines Werkstückes aus Glas strukturfrei zu polieren. Hierzu besteht die Möglichkeit, den Rohstrahl eines CO₂-Lasers zu verwenden und diesen über eine entsprechende Platte zu homogenisieren. In diesem Fall erübrigen sich dann aufwendige Investitionen in Fokusoptiken, sowie in Einrichtungen zur Abstandsregulierung während der Bearbeitung. Von entscheidendem Vorteil ist hierbei auch, daß unabhängig von der Form des Werkstückes und der Tiefe der Schliffmuster eine gleichmäßige Belichtung und damit eine gleichmäßige Qualität der Bearbeitung möglich sind.

Bei dem erfindungsgemäßen Verfahren können bei Werkstücken aus Bleikristall insbesondere auch Bleiabdampfungen bzw. Oxydationen wirksam verhindert werden, so daß die für Werkstücke aus Bleikristall typische Brillanz voll erhalten bleibt.

Weiterhin besteht bei der Erfindung auch die Möglichkeit, nur ganz bestimmte Flächenbereiche eines Werkstückes gezielt zu behandeln, so daß auf einer aufgerauhten Fläche ein Muster erzeugt wird. Hierdurch eröffnen sich Möglichkeiten, die mit der herkömmlichen Säurepolitur, aber auch mit der herkömmlichen Feuerpolitur nicht erreichbar sind.

Bei Verwendung von fokussierenden Optiken kann durch Leistungs- und Abstandsregelung erreicht werden, daß an der Oberfläche des Werkstückes gleichbleibende Leistungsflußdichten wirksam werden. Die für die Erfindung typischen Parameter liegen bezüglich der Leistungsflußdichte im Bereich zwischen etwa 50 W/cm² bis 700 W/cm², wobei vorzugsweise eine Leistungsflußdichte von etwa 300 W/cm² Verwendung findet. Die Vorschubgeschwindigkeiten liegen bei der Erfindung typischerweise im Bereich zwischen etwa 0,1 m/min und 10 m/min. Bevorzugt beträgt die Vorschubgeschwindigkeit 4 m/min, und zwar bei einer Leistungsflußdichte von etwa 300 W/cm² und einer Größe der zu behandelnden Fläche von etwa 2 bis 2,2 cm².

Mit der Erfindung lassen sich Bearbeitungszeiten kleiner als 5 Minuten, beispielsweise in der Größenordnung von 1 Minute erreichen. Diese kurzen Bearbeitungszeiten entsprechen auch den Forderungen einer wirtschaftlichen Produktion.

Bei der Erfindung ist es weiterhin auch möglich, eine einzige, punktuelle Energiequelle, beispielsweise einen einzigen Laser vorzusehen, dessen Strahl dann in mehrere Einzelstrahlen aufgeteilt wird, von denen jeder zur Behandlung eines Werkstückes verwendet wird. Hierdurch ist trotz nur einer einzigen Energiequelle die Behandlung mehrerer Werkstücke möglich. Bei Aufteilung des Laserstrahles in mehrere Einzel- oder Teilstrahlen ist es auch möglich, ein Werkstück gleichzeitig an verschiedenen Bereichen zu bearbeiten.

Nach der Behandlung wird das jeweilige Werkstück mit einem Handhabungssystem einem Abkühlungsofen zugeführt, der beispielsweise als Tunnelofen ausgebildet ist und das Werkstück spannungsarm auf Zimmertemperatur abkühlt, wobei auch evtl. durch die Behandlung eingebrachte, nicht erwünschten Spannungen im Werkstück abgebaut werden.

Weiterbildungen der Erfindung sind Gegenstand der Unteransprüche.

Die Erfindung wird im folgenden anhand der Figuren an einem Ausführungsbeispiel näher erläutert. Es zeigen:
- Fig. 1: in schematischer Darstellung eine Vorrichtung zum Strukturieren bzw. Polieren eines Werkstücks aus Bleikristallglas;
- Fig. 2: in einer graphischen Darstellung die für das Polieren bzw. Strukturieren geeignete Leistungsflußdichte in Abhängigkeit von der Vorschubgeschwindigkeit des Werkstückes bei der Vorrichtung nach Fig. 1.

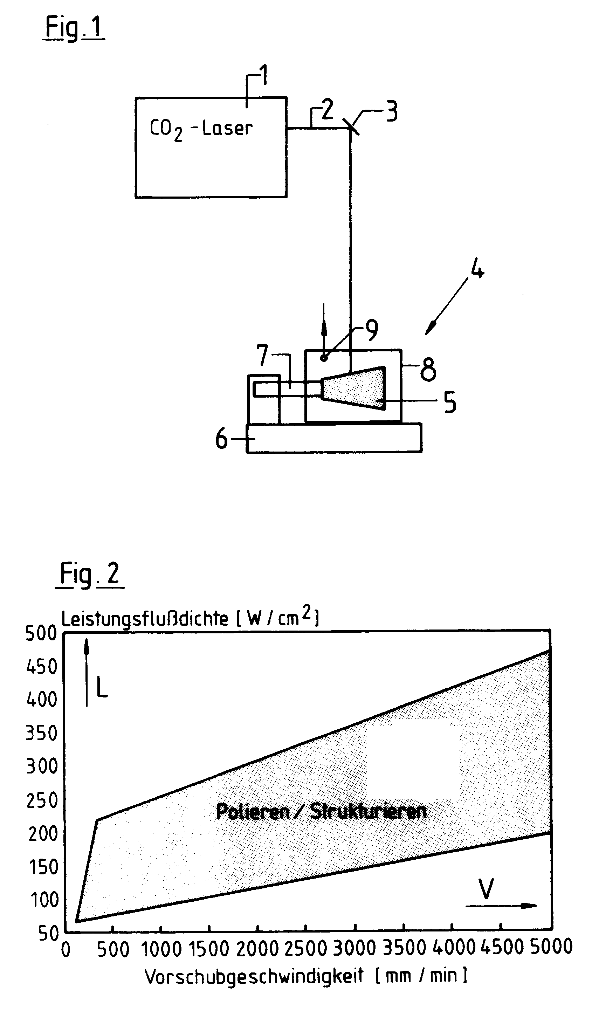

In der Fig. 1 ist 1 ein CO₂-Laser (cw-CO₂-Laser), der einen Laserstrahl 2 erzeugt, welcher über einen geeigneten Umlenk- und Fokussierspiegel 3 umgelenkt auf das an einem Werkstückträger 4 eingespannte Werkstück 5 gerichtet ist. Letzteres ist beispielsweise eine Vase aus Bleikristall, die z. B. eine Höhe von etwa 16 cm und einen Durchmesser von etwa 10 cm aufweist und der zur Erzielung einer blauen Farbgebung in der äußeren Schicht Kobaltoxyd zugefügt wurde. Der Werkstückträger 4 ist bei der dargestellten Ausführungsform ein in einer horizontalen Ebene bewegbarer x-y-Tisch mit einer Aufspannhalterung 7 für das Werkstück 5, die um eine Achse parallel zur x-y-Ebene, beispielsweise um eine Achse parallel zur x-Achse drehbar ist. Zumindest der das Werkstück 5 tragende Teil der Aufspannhalterung 7 ist in einem Ofen 8 angeordnet, in welchem das Werkstück 5 auf einer konstanten Temperatur von 500^{o}C gehalten wird. Der Ofen 8 besitzt selbstverständlich eine Eintrittsöffnung, durch die der umgelenkte Laserstrahl 2 eintreten und auf die Außenfläche des Werkstückes 5 auftreffen kann, und zwar bei der dargestellten Ausführungsform radial zur Drehachse der Aufspannhalterung 7.

Mit Hilfe einer nicht näher dargestllten Optik, beispielsweise eine Strichoptik ist der Laserstrahl 2 so eingestellt, daß er etwas außer Fokus auf das Werkstück 5 auftrifft, und zwar derart, daß sich eine Fläche für den auftreffenden Laserstrahl 2, d.h. eine Bearbeitungsfläche von etwa 2,2 cm² ergibt, und zwar bei einer Leistungsflußdichte des Laserstrahles von etwa 300 W/cm².

Bei der dargestellten Ausführungsform wird die gesamte Umfangsfläche des Werkstückes 5 punktuell und sukzessiv mit dem Laserstrahl 2 behandelt, und zwar durch Drehen der das Werkstück 5 tragenden Aufspannhalterung 7 um die Achse dieser Aufspannhalterung und durch Weiterbewegen des Tisches 6 und der an diesem Tisch vorgesehenen Elemente in einer der Drehachse der Aufspannhalterung 7 parallelen Achsrichtung. Die Vorschubgeschwindigkeit des Werkstückes 5 gegenüber dem Laserstrahl 2 ergibt sich somit im wesentlichen aus der Drehgeschwindigkeit der Aufspannhalterung 7 bzw. des Werkstückes 5, wobei durch eine nicht dargestellte Steuereinrichtung diese Drehgeschwindigkeit an die Formgebung des Werkstückes 5 derart angepaßt wird, daß trotz variierendem Durchmesser des Werkstückes 5 die Vorschubgeschwindigkeit im wesentlichen konstant bleibt, d.h. bei der dargestellten Ausführungsform, bei der das Werkstück 5 im wesentlichen kegelförmig ist, wird bei der Bearbeitung des in der Figur rechten Bereichs des Werkstückes 5 eine geringere Drehgeschwindigkeit für die Aufspannhalterung 7 verwendet als bei der Bearbeitung von in dieser Figur linken Bereichen des Werkstückes 5.

Bei der dargestellten Auführungsform ist die Vorschubgeschwindigkeit beispielsweise so gewählt, daß sie etwa 4 m/min beträgt. Mit diesem Wert lassen sich bei einer Leistungsflußdichte von 300 W/cm² für den Laserstrahl bei herkömmlichen Werkstücken 5, beispielsweise bei herkömmlichen Vasen aus Bleikristall eine Bearbeitungszeit von etwa 1 Min. pro Werkstück erreichen.

Das Werkstück 5 ist bevorzugt mit Hilfe eines Schamottsteines wämeisolierend in einem Wattefutter der Aufspannhalterung 7 eingespannt. Bei rotierender Aufspannhalterung 7 wird der Tisch 6 zumindest in der der Drehachse der Aufspannhalterung 7 entsprechenden Achsrichtung bevorzugt mehrfach relativ zum Laserstrahl 2 verfahren, so daß jeder Bereich bzw. jede Stelle der Umfangsfläche des Werkstückes 5 mehrfach von dem Laserstrahl 2 erfaßt wird. Die Vorschubgeschwindigkeit V und die Leistungsdichte L sind so aufeinander abgestellt, daß eine Behandlung bzw. eine die Oberfläche des Werkstückes 5 bleibend verändernde Absorption der Energie des Laserstrahles 2 nur dort stattfindet, wo die Oberfläche durch das Schliffmuster aufgerauht ist, und zwar ohne daß das Schliffmuster selbst durch den Laserstrahl 2 zerstört wird.

Um zu erreichen, daß der Laserstrahl 2 nur an den durch das Schleifen aufgerauhten Bereichen wirksam ist, sind die Arbeitsparameter, d.h. die Vorschubgeschwindigkeit V und die Leistungsflußdichte L so gewählt, daß sich der jeweilige Arbeitspunkt in dem der Fig. 2 schraffierten Bereich befindet. An bereits glatten Oberflächen des Werkstückes 5 ist der Laserstrahl 2 nicht wirksam.

Das behandelte Werkstück 5 besitzt an seiner mit dem Laserstrahl 2 behandelten Oberfläche eine Struktur mit einer Oberflächenqualität, die der herkömmlichen Säurepolitur entspricht.

Grundsätzlich ist es bei der Erfindung möglich, zur Steuerung der Leistung des Lasers 1 und/oder zur Steuerung der Vorschubgeschwindigkeit V Sensoren 9, d.h. berührungslos arbeitende Temperatursensoren vorzusehen, die die Temperatur des jeweils behandelten Bereichs der Oberfläche des Werkstückes 5 erfassen, wobei dann eine Steuereinrichtung in Abhängigkeit von diesen Daten die Leistung des Lasers 1 und/oder die Vorschubgeschwindigkeit V, beispielsweise die Drehgeschwindigkeit der Aufspannhalterung 7 auch in Abhängigkeit weiterer, eingegebener Parameter, wie beispielsweise Glassorte, Temperatur des Ofens 8 usw. derart steuern, daß eine optimale Behandlung der Oberfläche ohne Oxydation erreicht wird.

Grundsätzlich ist es aber auch möglich, die die Leistung des Lasers 1 und/oder die Vorschubgeschwindigkeit steuernde Steuereinrichtung so auszubilden, daß sie nach Eingabe der ein bestimmtes Werkstück 5 charakterisierenden Daten in einem Speicher bereits vorhandene optimale Werte für die Behandlungsparameter (Leistung des Lasers 1 und/oder Vorschubgeschwindigkeit V und/oder Temperatur des Ofens 8) abruft und mit diesen Daten die Vorrichtung entsprechend steuert.

Die Erfindung wurde voranstehend an einem Ausführungsbeispiel beschrieben. Es versteht sich, daß zahlreiche Abwandlungen möglich sind.

## Patentansprüche

1. Verfahren zum Strukturieren bzw. Polieren von Oberflächen von Werkstücken aus Glas, insbesondere Bleikristall, bei dem das Werkstück (5) an wenigstens einem Teil seiner Oberfläche punktuell und sukzessiv mit der Energie wenigstens eines Lasers oder dgl. punktuell wirkenden Energiequelle (1) zum partiellen Schmelzen des Glases an der Oberfläche beaufschlagt wird, dadurch gekennzeichnet, daß die Leistungsflußdichte (L) der Energiequelle (1) so eingestellt ist, daß nur an eine Aufrauhung aufweisenden Oberflächenbereichen des vorzugsweise vorgewärmten Werkstückes (5) eine Behandlung der Glasoberfläche des Werkstückes (5) erfolgt.

2. Verfahren nach Anspruch 1, dadurch gekennzeichnet, daß als Energiequelle ein CO₂-Laser bevorzugt ein cw-CO₂-Laser Verwendung findet, und/oder daß die Wellenlänge der Laserbehandlung im Bereich zwischen etwa 8,5 und 11 Mikrometer, vorzugsweise etwa 10,6 Mikrometer ist,
und/oder daß der die Energiequelle bildende Laser (1) außer Fokus betrieben wird.

3. Verfahren nach Anspruch 1 oder 2, dadurch gekennzeichnet, daß das Werkstück (5) zur Erzeugung einer Vorschubgeschwindigkeit (V) relativ zur Energiequelle (2) in wenigstens einer Achsrichtung bewegt und/oder um wenigstens eine Achse gedreht wird,
und/oder daß die Energiequelle (1) zur Erzielung der Vorschubgeschwindigkeit (V) relativ zum Werkstück (5) in wenigstens einer Achsrichtung bewegt wird,
und/oder daß eine wenigstens einen Spiegel (3) aufweisenden Optik verwendet ist, bei derdieser Spiegel zur Erzielung der Vorschubgeschwindigkeit bewegt wird,
wobei vorzugsweise die Relativbewegung zwischen Werkstück (5) und Energiequelle (1) und/oder die Vorschubgeschwindigkeit in Abhängigkeit von der Formgebung und/oder Strukturierung des Werkstückes (5) gesteuert wird, und zwar bevorzugt derart, daß sich an dem gesamten, behandelten Oberflächenbereich des Werkstückes (5) eine im wesentlichen gleiche Vorschubgeschwindigkeit ergibt.

4. Verfahren nach einem der Ansprüche 1 bis 3, dadurch gekennzeichnet, daß das Werkstück (5) an seinem behandelten Bereich wenigstens zweimal durch die Energiequelle (1) behandelt wird.

5. Verfahren nach einem der Ansprüche 1 bis 4, dadurch gekennzeichnet, daß die Temperatur in der Laserbehandlungszone höher ist als die Vorwärmtemperatur.

6. Verfahren nach einem der Ansprüche 1 bis 4, dadurch gekennzeichnet, daß die Temperatur des Werkstückes (5) im behandelten Bereich nur geringfügig von der Vorwärmtemperatur abweicht.

7. Verfahren nach einem der Ansprüche 1 bis 6, dadurch gekennzeichnet, daß die jeweils behandelte Fläche in der Größenordnung von etwa 1 bis 4 cm², bevorzugt in der Größenordnung von etwa 2 bis 2,5 cm² liegt.

8. Verfahren nach einem der Ansprüche 1 bis 7, dadurch gekennzeichnet, die Vorschubgeschwindigkeit (V) im Bereich zwischen etwa 0,1 bis 10 m/min liegt, vorzugsweise 4m/min beträgt.

9. Verfahren nach einem der Ansprüche 1 bis 8, dadurch gekennzeichnet, daß die verwendete Leistungsflußdichte (L) im Bereich von etwa 15 bis 700 W/cm² liegt, vorzugsweise etwa 300 W/cm² beträgt.

10. Verfahren nach einem der Ansprüche 1 bis 9, dadurch gekennzeichnet, daß der Laserstrahl eines Lasers (1) in mehrere Teilstrahlen aufgeteilt und jeder Teilstrahl zur Behandlung eines eigenen Werkstückes (5) oder sämtliche Teilstrahlen zur Behandlung eines gemeinsamen Werkstückes (5) verwendet werden.

## Claims

1. Method for patterning or polishing surfaces of workpieces made of glass, in particular lead crystal, by the selective and gradual impinging upon the work piece (5) on at least one portion of its surface, of the energy of at least a laser or similar selectively operating energy source (1) to partially melt the glass of the surface, characterised in that the power flux density (L) of the energy source (1) is so adjusted that a treatment of the glass surface of the workpiece (5) only takes place on a roughened surface portion of the preferably pre-heated workpiece (5).

2. Method according to claim 1 characterised in that a CO₂-laser, preferably a cw-CO₂-laser is used as the energy source and/or that the wavelength of the laser treatment in the area is between approximately 8.5 and 11 micrometers, preferably approximately 10.6 micrometers, and/or that the laser (1) forming the energy source is operated out of focus.

3. Method according to claim 1 or 2 characterised in that the workpiece (5) moves in at least one axis direction and/or is rotated around at least one axis to produce a rate of feed (V) relative to the energy source (2), and/or that the energy source (1) is moved in at least one axis direction relative to the workpiece (5) for the achievement of the rate of feed (V) and/or that optics are used having at least a mirror (3) with this mirror being moved for the achievement of the rate of feed whereby preferably the relative movement between the workpiece (5) and energy source (1) and/or the rate of feed is controlled in dependence upon the shaping and/or patterning of the workpiece (5) and in fact preferably in such a way that on the whole treated surface area of the workpiece (5) essentially a similar rate of feed is produced.

4. Method according to one of claims 1 to 3 characterised in that the workpiece (5) is treated at least twice by the energy source (1) on its treated area.

5. Method according to one of claims 1 to 4 characterised in that the temperature in the laser treatment zone is higher than the pre-heat temperature.

6. Method according to one of claims 1 to 4 characterised in that the temperature of the workpiece (5) in the treatment area differs only insignificantly from the pre-heat temperature.

7. Method according to one of claims 1 to 6 characterised in that each treated surface has a size of the order of from approximately 1 to 4 cm², preferably of the order of from approximately 2 to 2.5 cm².

8. Method according to one of claims 1 to 7 characterised in that the rate of feed (V) lies in the range of between approximately 0.1 to 10 m/minute, preferably being 4 m/minute.

9. Method according to one of claims 1 to 8 characterised in that the power flux density (L) used lies in the range of from approximately 15 - 700 watts/cm², preferably being 300 watts/cm².

10. Method according to one of claims 1 to 9 characterised in that the laser beam of a laser (1) is sub-divided into several beam portions, and each beam portion is used for the treatment of a separate workpiece (5) or all the beam portions are used for the treatment of a common workpiece (5).

## Revendications

1. Procédé pour structurer et polir des surfaces de pièces à travailler en verre, notamment en cristal de plomb, avec lequel la pièce (5) est alimentée sur au moins une partie de sa surface de façon ponctuelle et successive avec l'énergie d'au moins un laser ou d'une source d'énergie (1) similaire agissant de façon ponctuelle pour la fusion partielle du verre à la surface, caractérisé en ce que la densité surfacique de puissance (L) de la source d'énergie (1) est réglée de telle façon qu'un traitement de la surface en verre de la pièce (5) se fasse uniquement sur des zones de surface présentant un aspect rugueux de la pièce (5) de préférence préchauffée.

2. Procédé selon la revendication 1, caractérisé en ce qu'on utilise comme source d'énergie un laser à CO₂, de préférence un laser continu à CO₂, et/ou en ce que la longueur d'onde du traitement au laser se situe dans la plage comprise entre environ 8,5 et 11 microns, est de préférence d'environ 10,6 microns,
et/ou en ce que le laser (1) formant la source d'énergie est exploitée en dehors du foyer.

3. Procédé selon la revendication 1 ou 2, caractérisé en ce que la pièce (5) est déplacée pour générer une vitesse d'avancement (V) par rapport à la source d'énergie (2) dans au moins une direction axiale et/ou est tournée autour d'au moins un axe
et/ou en ce que la source d'énergie (1) est déplacée pour obtenir la vitesse d'avancement (v) par rapport à la pièce (5) dans au moins une direction axiale,
et/ou en ce qu'on utilise une optique présentant au moins un miroir (3), sur laquelle ce miroir est déplacé, pour obtenir la vitesse d'avancement,
le déplacement relatif entre la pièce (5) et la source d'énergie (1) et/ou la vitesse d'avancement étant commandée en fonction du façonnage et/ou de la structuration de la pièce (5), et ce de préférence de telle manière que l'on obtienne une vitesse d'avancement sensiblement identique sur l'ensemble de la zone superficielle traitée de la pièce (5).

4. Procédé selon l'une quelconque des revendications 1 à 3, caractérisé en ce que la pièce (5) est traitée sur sa zone traitée au moins deux fois par la source d'énergie (1).

5. Procédé selon l'une quelconque des revendications 1 à 4, caractérisé en ce que la température dans la zone de traitement par laser est plus élevée que la température de préchauffage.

6. Procédé selon l'une quelconque des revendications 1 à 4, caractérisé en ce que la température de la pièce (5) dans la zone traitée ne diffère que légèrement de la température de préchauffage.

7. Procédé selon l'une quelconque des revendications 1 à 6, caractérisé en ce que la surface respectivement traitée se situe dans une plage allant d'environ 1 à 4 cm², de préférence dans une plage allant d'environ 2 à 2,5 cm².

8. Procédé selon l'une quelconque des revendications 1 à 7, caractérisé en ce que la vitesse d'avancement (V) se situe dans la plage comprise entre environ 0,1 et 10 m/min, et est de préférence de 4m/min.

9. Procédé selon l'une quelconque des revendications 1 à 8, caractérisé en ce que la densité surfacique de puissance (L) se situe dans la plage allant d'environ 15 à 700 W/cm², et est de préférence d'environ 300 W/cm².

10. Procédé selon l'une quelconque des revendications 1 à 9, caractérisé en ce que le rayon d'un laser (1) est divisé en plusieurs rayons partiels et en ce qu'on utilise chaque rayon partiel pour le traitement d'une pièce (5) propre ou tous les rayons partiels pour le traitement d'une pièce (5) commune.
